# EUROPEAN PATENT SPECIFICATION

(11) **EP 4 379 571 B1**
(45) Date of publication and mention of the grant of the patent: **08.04.2026**
(21) Application number: 23207243.9
(22) Date of filing: 01.11.2023
(51) Int. Cl.: G06F 16/332, G06F 40/174, G06F 40/186, G09B 7/02, G09B 7/06

(54) **METHOD AND SYSTEM FOR DYNAMIC ITEM GENERATION BY GENERATOR FUNCTION FOR ASSESSMENT IN CANDIDATE CONSOLE**
VERFAHREN UND SYSTEM ZUR DYNAMISCHEN ARTIKELERZEUGUNG DURCH GENERATORFUNKTION ZUR BEURTEILUNG IN EINER KANDIDATENKONSOLE
PROCÉDÉ ET SYSTÈME DE GÉNÉRATION DYNAMIQUE D'ARTICLES PAR FONCTION DE GÉNÉRATEUR POUR ÉVALUATION DANS UNE CONSOLE CANDIDATE

(30) Priority: 01.12.2022 IN 202221069487
(43) Date of publication of application: 05.06.2024
(73) Proprietor: Tata Consultancy Services Limited, Mumbai, Maharashtra 400 021 (IN)
(72) Inventor: SHAH, Viral Prakash, Thane West 400607, Maharashtra (IN); CHAUHAN, Deependra, Uttar Pradesh 226010 (IN); DIXIT, Anugrah, Uttar Pradesh 226010 (IN); TANDON, Gaurav, Uttar Pradesh 226010 (IN)
(74) Representative: Goddar, Heinz J.

(56) References cited:
- EP-A1- 2 575 123
- US-A1- 2011 217 685
- US-A1- 2018 096 619

## Description

### CROSS-REFERENCE TO RELATED APPLICATIONS AND PRIORITY

The present application claims priority to Indian application, Application No. 202221069487, filed in India on December 01, 2022.

### TECHNICAL FIELD

The disclosure herein generally relates to item generation, and, more particularly, to method and system for dynamic item generation by a generator function for assessment in a candidate console.

### BACKGROUND

Item creation is a process of creating topic ideas that appeal to every individual persona, creating written or visual content around a topic or ideas, and making that information accessible to audience as a blog, video, infographic, or other content formats. For example, existing assessment system for institution/organization have a lot of malpractices such as leakage of question paper, cheating, etc., which are of major concerns especially due to manual intervention at multiple levels in the lifecycle of content creation. There is the risk of losing integrity of the question paper and the institution/organization. In the current scenario, generation of the question paper is static. While conducting an assessment, the question paper created by authors and the question paper that are presented to users are the same. Therefore, the actual question paper faces manual intervention in the form of authoring, reviewing, proofreading, and validating before assessment. Thereby generating a chance of losing the integrity and uniqueness of the question paper. Thus, the manual intervention can be the sole reason for a leak before assessment, which is unavoidable and leads to reoccurrence of assessment which may hamper the institution/organization's goodwill, economy, student efforts, time etc.

Conventional approaches used in the generation of the question paper utilizes automated systems which rely on fetching questions from free text or knowledge banks, based on one or more fixed criteria like category, such as number of marks and chapter of study. After selecting questions based on these fixed criteria and then compiled to form the question paper. Sometimes, question bank is also used as a source. For the automated generation, different kinds of algorithms have been used like fuzzy algorithm and shuffling algorithm. The different question papers are generated using randomization techniques, such as a shuffling algorithm. Some conventional systems provide different question papers for a similar or same event to introduce a fair evaluation process. The existing approaches were focused on enhancing speed and reducing human efforts but less focused on customization for the generation of the question paper.

Document EP 2 575 123 A1 relates to a method for customized question paper generation. The method includes assigning at least one key value to each of a plurality of questions, and storing the questions along with the at least one associated key value in a question bank. The method further includes fetching the stored questions based on rules in a question paper template, where the rules are based on the at least one key value. Furthermore, the method includes validating the fetched questions based on at least one constraint and generating the question paper based on the validatin

Document US 2018/096619 A1 discloses dynamic assessment by an expert system software (ESS) module. The ESS module may determine a minimum set of diagnostic questions to identify a student's strengths and/or weaknesses for a given subject matter. Each diagnostic question may be a unique question variant generated from a dynamic question template. The ESS module may automatically and dynamically build a personal lesson plan that includes lessons on topics of the subject matter that the student has not mastered. The ESS module may dynamically modify the personal lesson plan to change a lesson and/or add lesson(s) considered by the ESS module as necessary for the student to master the subject matter. Given the ESS module's knowledge on various components of a question such as equation(s) used to produce a correct answer to the question, the ESS module may generate image(s), customized hint(s), customized explanation(s), and/or examine student solutions in step-by-step fashion

Document US 2011/217685 A1 discloses an automated system for multiple types of knowledge content generation for enhancing learning, creativity, insights and assessments comprising the means of: Capturing one or more contents; Storing the captured contents in raw content database; Classifying the captured content by one or more means of selected from Bookmarking or annotating, Using meta information from the content source files, Using algorithms to classify information and Receiving feedback from users and user interaction with content; Defining content template; Specifying rules and algorithms for automatic generation of knowledge content; Finally, Using the generated knowledge content by means of a display to candidate. Invention reduces the manual effort and time taken to create the multiple types of knowledge contents as well as reduce the cost for creation of the multiple types of knowledge contents.

### SUMMARY

Embodiments of the present disclosure present technological improvements as solutions to one or more of the above-mentioned technical problems recognized by the inventors in conventional systems. The invention is set out in appended set of claims.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for dynamic item generation by a generator function for assessment in a candidate console, according to some embodiments of the present disclosure.
FIG. 2 illustrates an exemplary block diagram of the system of FIG.1, according to some embodiments of the present disclosure.
FIG. 3A and FIG. 3B are exemplary flow diagrams illustrating a method of dynamically generating the item by the generator function for the assessment in the candidate console, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

There is a need for an approach to address challenges raised due to malpractices, manual intervention at multiple levels, and integrity loss in a lifecycle of a content creation in assessment. Embodiments of the present disclosure provide a system and method for dynamic item generation in a candidate console by a generator function. The system generates an item by calling the generator function and providing a template for the item and multiple input values. The item is interchangeably referred to as one or more questions within a question paper which includes corresponding representation. The input values correspond to a range of variables and the input values are generated automatically whenever the generator function receives a call. After generation of the items, a validator verifies and validates the item generated by the generator. The validator is a web-based module where the generated item may be presented to an author to confirm whether the generated item is correct and if required to make the necessary changes in the generator function to generate correct values. The purpose of the validator is to confirm authenticity of a template item by generating multiple versions of the items during authoring and validating whether correct or not. The validator includes a responsibility to verify one or more options (e.g., correct, and incorrect) provided in case of multiple-choice question (MCQ). At the time of assessment, when a candidate or a participant clicks on the console to initiate the assessment, automatically, the system calls the generator function. The generator function may be configured to generate one or more placeholder values for the generic items within the question paper according to defined rules and variables. The system thereby produces an actual and customized question for every candidate at the time of assessment. Also, the system provides a default item in case the generator function throws an error then default item is presented to the participant.

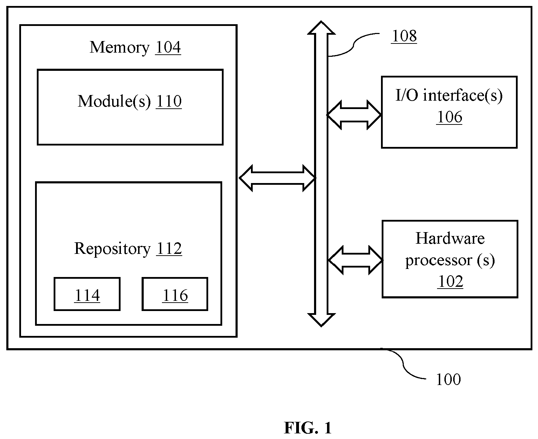

Referring now to the drawings, and more particularly to FIGS. 1 through 3B, where similar reference characters denote corresponding features consistently throughout the figures, there are shown preferred embodiments, and these embodiments are described in the context of the following exemplary system and/or method.

FIG. 1 illustrates a block diagram of a system 100 for dynamic item generation by a generator function for assessment in a candidate console, according to some embodiments of the present disclosure. In an embodiment, the system 100 includes one or more processor(s) 102, communication interface device(s) or input/output (I/O) interface(s) 106, and one or more data storage devices or memory 104 operatively coupled to the one or more processors 102. The memory 104 includes a database. The one or more processor(s) processor 102, the memory 104, and the I/O interface(s) 106 may be coupled by a system bus such as a system bus 108 or a similar mechanism. The one or more processor(s) 102 that are hardware processors can be implemented as one or more microprocessors, microcomputers, microcontrollers, digital signal processors, central processing units, state machines, logic circuitries, and/or any devices that manipulate signals based on operational instructions. Among other capabilities, the one or more processor(s) 102 is configured to fetch and execute computer-readable instructions stored in the memory 104. In an embodiment, the system 100 can be implemented in a variety of computing systems, such as laptop computers, notebooks, hand-held devices, workstations, mainframe computers, servers, a network cloud, and the like.

The I/O interface device(s) 106 can include a variety of software and hardware interfaces, for example, a web interface, a graphical user interface, and the like. The I/O interface device(s) 106 may include a variety of software and hardware interfaces, for example, interfaces for peripheral device(s), such as a keyboard, a mouse, an external memory, a camera device, and a printer. Further, the I/O interface device(s) 106 may enable the system 100 to communicate with other devices, such as web servers and external databases. The I/O interface device(s) 106 can facilitate multiple communications within a wide variety of networks and protocol types, including wired networks, for example, local area network (LAN), cable, etc., and wireless networks, such as Wireless LAN (WLAN), cellular, or satellite. In an embodiment, the I/O interface device(s) 106 can include one or more ports for connecting number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 110 and a repository 112 for storing data processed, received, and generated by the plurality of modules 110. The plurality of modules 110 may include routines, programs, objects, components, data structures, and so on, which perform particular tasks or implement particular abstract data types.

Further, the database stores information pertaining to inputs fed to the system 100 and/or outputs generated by the system (e.g., data/output generated at each stage of the data processing) 100, specific to the methodology described herein. More specifically, the database stores information being processed at each step of the proposed methodology.

Additionally, the plurality of modules 110 may include programs or coded instructions that supplement applications and functions of the system 100. The repository 112, amongst other things, includes a system database 114 and other data 116. The other data 116 may include data generated as a result of the execution of one or more modules in the plurality of modules 110. Further, the database stores information pertaining to inputs fed to the system 100 and/or outputs generated by the system (e.g., at each stage), specific to the methodology described herein. Herein, the memory for example the memory 104 and the computer program code configured to, with the hardware processor for example the processor 102, causes the system 100 to perform various functions described herein under.

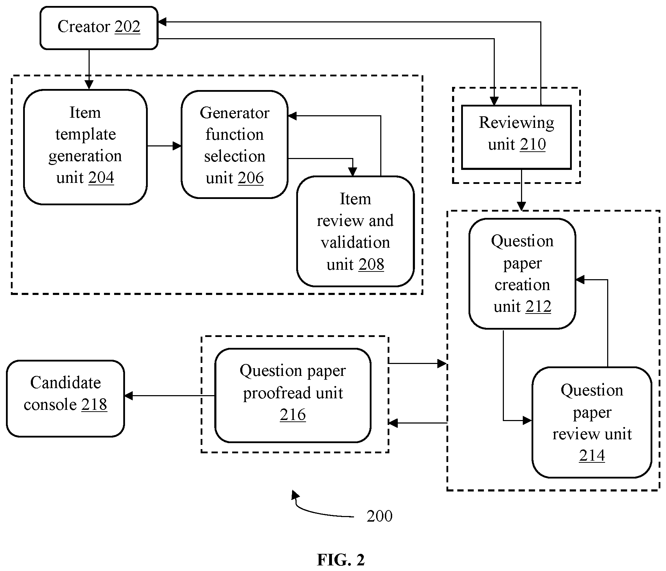

FIG. 2 illustrates an exemplary block diagram of the system 100 of FIG.1, according to some embodiments of the present disclosure. The system 200 may be an example of the system 100 (FIG. 1). In an example embodiment, the system 200 may be embodied in, or is in direct communication with the system, for example the system 100 (FIG. 1). The system 200 includes a creator 202, an item template generation unit 204, a generator function selection unit 206, an item review and validation unit 208, a reviewing unit 210, a question paper creation unit 212, a question paper review unit 214, a question paper proofread unit 216, and a candidate console 218. The item template generation unit 204 is configured to create one or more templates for one or more items by the creator 202. In an embodiment, the item is alternatively referred throughout as a single question within a question paper which includes corresponding representation. The one or more templates for the one or more items includes a generator function and one or more placeholder variables. In an embodiment, the one or more items correspond to one or more questions. In an embodiment, the one or more templates for the one or more items are created by the author 202. The one or more templates for the one or more items are created based on one or more attributes: (a) subject, (b) chapter, (c) section, (d) difficulty level, (e) language, (f) distractor level. The generator function is a function in any scripting language. In an embodiment, one or more placeholder values specific to an item are generated automatically whenever the generator function receives a call. In an embodiment, the creator 202 may utilize Java/Java script as implementation language but not limited to the languages like python, ruby as a scripting language. For example, the scripting language is used by the creator 202 to define one or more rules while providing the template of the item to the generator function,

For example, below mentioned generic item and corresponding generator function:

```
      Generic item: X + Y = Z
      <script>
      function myFunction() {
      var X= Math.floor(Math.random() * 10);
      var Y= Math.floor(Math.random() * 10);
      var Z = X +Y;
      var inputJson = {"X ":X, "Y": Y, "option" :
      {"opt1 ": Z, "opt2": Z+2, "opt3" : Z+4 }};
      return inputJson;
      }
      </script>
```

The generator function selection unit 206 is configured to dynamically generate one or more placeholder values based on one or more replacement values corresponding to each placeholder variable from the one or more placeholder variables. In an embodiment, the one or more placeholder variables corresponds to one or more measurable factors which replaces with one or more textual parameters (e.g., mathematics is X + Y= Z) generated by the generated function and completes the definition of one or more generated items. The generator function provides replacement values for one or more items. For example, the one or more items from a stream 'B' e.g., mathematics is X + Y= Z so if a generator function is giving one or more values like 2, 3 and four options like 5, 6, 7, and 8, then one or more items are created and used in the assessment. The one or more items are not limited to one stream and can be used for every stream and corresponding items are created.

For example, the one or more items corresponding to the one or more streams are created as below mentioned:
Stream 'A' referred as General Knowledge:
   i) Select state which produces more<variable>.
   ii) A dice is numbered from 1<var 1> to 6<var2> in different ways.
If 1 is adjacent to 2<var 3>, 4<var 4> and 6, then which of the following statements is necessarily true?
The stream 'B' referred as Mathematics:
   Sum of two Numbers <var 1> + <var 2> = ?
Stream 'C' referred as Physics:
   i) The <first law> of thermodynamics is related to conservation of which one of the following.
      <option 1><option 2><option 3><option 4>
   ii) Maxwell<Var 1> is unit of which of the following.
      <option 1><option 2><option 3><option 4>
   iii) When resistors are connected in series<var>, then net resistance.
      <option 1><option 2><option 3><option 4>
Stream 'D' referred as English:
   i) Given below are 5 parts of a sentence, you are required to make a meaningful sentence. The correct order of parts is the answer:
      ABCDE(var 1)
      BACED(var 2)
      DEABC(var 3)
      EBCDA(var 4)
   ii) In the following questions, find the correctly spelt word:
      Recommandation(var 1)
      Recommendation(var 2)
      Recomendations(var 3)
      Reccomendation(var 4)
Stream 'E' referred as Story Writing :
   A character names can be replaced in every story.

The one or more generated item associated with one or more required options are obtained based on the one or more placeholder values upon dynamically receiving one or more calls from the generator function. The item review and validation unit 208 is configured to enable the creator 202 to view the question by calling a validator to ensure correctness and after previewing, the question is marked as complete. A validated item is obtained by mapping the one or more generated items associated with the one or more required options to the one or more templates for the one or more items.

The reviewing unit 210 is configured to view contents of the question and the attributes (i.e., key details and a question timer) by calling the generator function. The reviewing unit 210 selects the one or more required options and provides one or more hints. In an embodiment, the one or more required options corresponds to (a) a correct answer, or (b) an incorrect answer. The reviewing unit 210 can change one or more attributes of the question as applicable. The reviewing unit 210 is configured to compare version associated with a reviewer and version associated with the creator 202. For example, (a) if there are no mismatch, then the question is sent the question paper 'A', and the one or more hints provided by the creator 202 are considered; (b) if there is a mismatch, a discrepancy report is generated, and if the reviewer accepts the version of the creator 202, then the item is sent to the question paper creation unit 212; and (c) if there is a mismatch and if the reviewer does not accept the version of the creator 202, then the question are sent back to the creator 202.

The creator 202 receives comparison of his/her version and the reviewer's version. If the creator 202 accepts the reviewer's version, then the question is sent to the question paper creation unit 212. If the creator does not accept reviewer's version, then the question is retired. If there are any changes to be performed by the creator 202 in contents of the question as suggested by the question reviewer, then the question is sent to the question paper creation unit 212. The question paper creation unit 212 is configured to create the question paper based on selection of rule and the generated items. For example, while preparing the question paper, if there is a need to select ten questions in the stream of a general knowledge and a geography with a difficult level as "easy" then the meta-attributes attached with the item are used while fetching items in the question paper. The question paper review unit 214 is configured to review the question paper which corresponds to: (a) if there is no need of modification, then the question paper is sealed in the assessment; and (b) if there is a need of modification, then the question paper is sent back to the question paper creation unit 212.

The question paper proofread unit 216 is configured to proofread the question paper. A proofreader clicks on the item panel and the associated generator function is invoked automatically. The question paper is previewed which corresponds to: (a) if no modification is needed, then the proofreading is completed; and (b) if there is a need of modification, then a request is sent to the creator 202 for modification. The question paper is bundled, sealed, and pushed to the candidate console 218 after proofreading. The generator function is called whenever the participant clicks on the number panel. The generator function is called to create the question and the question option values for one or more questions within question template at the time of preview, proof reading to the proofreader, and at the time of delivering the question paper to the participants. In an embodiment, if there is an error by the generator function, after placing values to the placeholder in the template, the default question appears in the candidate console 218. In an embodiment, a display module is to present a front-end screen to the creator 202 for the item validation as well as to present the question on screen of the candidate console 218 during the assessment.

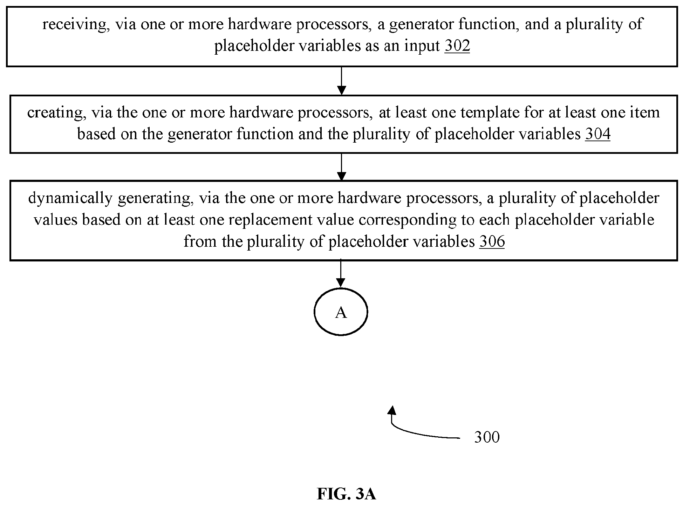

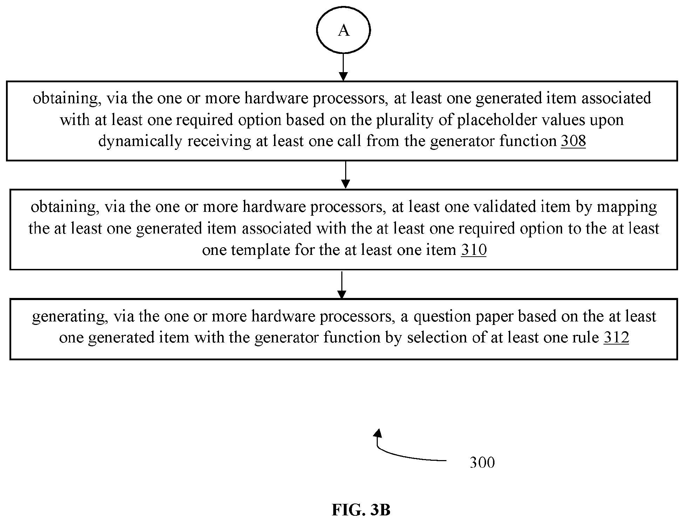

FIG. 3A and FIG. 3B are exemplary flow diagrams illustrating a method 300 of dynamically generating the item by the generator function for the assessment in the candidate console 218, according to some embodiments of the present disclosure. In an embodiment, the system 100 comprises one or more data storage devices or the memory 104 operatively coupled to the one or more hardware processors 102 and is configured to store instructions for execution of steps of the method by the one or more processors 102. The flow diagram depicted is better understood by way of following explanation/description. The steps of the method of the present disclosure will now be explained with reference to the components of the system as depicted in FIGS. 1 and 2.

At step 302, a generator function, and one or more placeholder variables are received as an input. At step 304, one or more templates for one or more items are created based on the generator function and the one or more placeholder variables. In an embodiment, the one or more items corresponds to one or more questions. In an embodiment, the one or more templates for the one or more items are created by an author. In an embodiment, the one or more templates for the one or more items are created based on one or more attributes: (a) subject, (b) chapter, (c) section, (d) difficulty level of the one or more items (e.g., simple, or moderate, or complex), (e) language, and (f) distractor level. At step 306, one or more placeholder values are dynamically generated based on one or more replacement values corresponding to each placeholder variable from the one or more placeholder variables. At step 308, one or more generated items associated with one or more required options are obtained based on the one or more placeholder values upon dynamically receiving one or more calls from the generator function. The one or more replacement values are generated by the generator function to replace one or more placeholder variables in the one or more generated items. In an embodiment, the one or more required options corresponds to: (a) a correct answer, or (b) an incorrect answer. At step 310, one or more validated items are obtained by mapping the one or more generated items associated with the one or more required options to the one or more template for the one or more item. At step 312, a question paper is generated based on the one or more generated items with the generator function by selection of one or more rules.

### Experimental results:

For example, a study is conducted to initiate a method for generation of customized question/items. The creator 202 initiates a process for meta question template by following some steps: (i) click on content bank authoring; (ii) click on question management >> create question >> select question type; (iii) under the question text, add the required variables; (iv) click on 'add/update meta configuration'; and (v) under "define constraint type", select the value as Java^{®} supported scripting language (JS) but not limited to one or more scripting languages to configure the value. The generated function and two variables are used as an input for required output. The one or more constraints (i.e., validation) on input variable are handled by the JS function logic itself i.e., capturing generic variables and generator function in item authoring screen. After item creation, search the item with an item id and a seal (i.e., finalized item) and then select simulate option from one or more actions. Using a simulator, the creator 202 may validate the generator function, and create any number of actual items. There is a need to bundle one or more generated items along with the item template. The creator 202 uses one or more meta questions while authoring the question paper and seal i.e., the finalized item to be bundled within a drive. For example, a drive consists of set of 250-300 participants who appear for an assessment in given test centre with respect to a single server. For a review process, the generator function works as a driver and generate the paper, that are different from an actual paper. After bundling and sealing the question paper, which is shared with an institute/ organization. At the time of the assessment, the question paper is downloaded in a test centre and candidate, or the participant launches the actual question paper. When candidate/participant clicks on the number panel at the candidate console 218 to attempt any item, then application calls the generator function to get replacement values and present newly generated items in the candidate console 218.

The embodiment of present disclosure herein addresses unresolved problem of maintaining integrity of the question paper or items of the assessment. The embodiment of the present disclosure provides an approach for generating templates items, questions or question set without any manual intervention using the generator function and variable input. The claimed approach is utilized in the education sector but not limited to assessments like collage exams, school exams, and competitive examinations. The item generation is not restricted to numerical questions, suitable for all possible types of the questions that are required to be generated. The claimed approach is not limited to any single domain but can rather be extended to any domain via place holder values (i.e., variables within item) which may be generated via the generator function. For each template item there may be an associated generated item by default which takes place in case where the generator function throws an error while getting called for a particular participant.

The embodiments of present disclosure in which the assessment conducting process is reversed i.e., first actual paper reflected in candidate system then in a datacenter for evaluation. Therefore, the question paper is not seen by any other person, combats occurrence of leakage of examination paper before assessment, and leads to fair assessment and avoids any event of assessment reoccurrence. The generation of the question paper in the candidate console that are unique for all other candidates present in same assessment, which combats any kind of event like cheating during the assessment. After the creation of item/question by author, the item needs validation from the author and other administrative authority to ensure accuracy of the question paper. **In** the claimed approach, after the generation of item template and the generator function, and whenever the generator function is called, which results in different question having similar pattern.

The embodiment of present disclosure restricts any leakage of the question paper before assessment, this leads to fair assessment and avoids any event of assessment recurrence. The embodiment of present disclosure presents dynamic and adaptable question paper generation system, which can cater to ever growing education industry to provide unique and suitable question papers for variety of examinations. The embodiment of present disclosure allows for actual paper generation to take place in the candidate console during the assessment. The system generates different questions for every student which may not just be restricted to shuffling of the questions. The system secures the actual item/question from any kind of malpractice before and during the assessment. The use of the generator function to generate unique and different questions ensure the security of paper from any malicious activity. Therefore, the generation of one or more different questions during one or more stages i.e., while authoring, proofreading, and reviewing, thereby protects the integrity of the actual question paper.

The actual item generated in the candidate console by clicking on panel which makes are adaptable. When the candidate clicks on the panel, automatically generator starts putting placeholder values into the generic template as per defined variables. Therefore, students may not need to be trained in using the present invention. The embodiment of present disclosure does not focus on randomization, instead focuses on generating different questions in the candidate console by clicking on the panel to protect the integrity and uniqueness of the item or question. The embodiment of present disclosure leads to an error free question because of multiple calls of validator to verify and validate the input provided by generator post generation of the question. The embodiment of present disclosure may include an option to produce a default item in cases where generator has thrown any exceptional value which makes the system accurate and free from any error. The input required for generator may also be validated via validator, i.e., the part of item creation screen, which validates correctness of their generator function via multiple generator calls. Accordingly, every user involved either proofreader, candidate or any other person always view different question/option placeholder values generated through function call and nobody knows actual and exact question which is going to be appeared in the assessment. The embodiment of present disclosure is not limited to any type of question but can be used for assessment, essay, fill in the blanks etc.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), comprising:
receiving, via one or more hardware processors, a generator function, and a plurality of placeholder variables as an input (302);
creating, via the one or more hardware processors, at least one template for at least one item based on the generator function and the plurality of placeholder variables (304);
dynamically generating, via the one or more hardware processors, a plurality of placeholder values based on at least one replacement value corresponding to each placeholder variable from the plurality of placeholder variables (306);
obtaining, via the one or more hardware processors, at least one generated item associated with at least one required option based on the plurality of placeholder values upon dynamically receiving at least one call from the generator function, wherein the at least one replacement value is generated by the generator function to replace the plurality of placeholder variables in the at least one generated item (308);
obtaining, via the one or more hardware processors, at least one validated item by mapping the at least one generated item associated with the at least one required option to the at least one template for the at least one item (310), wherein the at least one required option corresponds to: (a) a correct answer, or (b) an incorrect answer;
generating, via the one or more hardware processors, a question paper based on the at least one generated item with the generator function by selection of at least one rule;
reviewing, via the one or more hardware processors the question paper, wherein if
(a) if the question paper is not modified, then the question paper is sealed in an assessment; and
(b) if the question paper is modified, then the question paper is sent back to question paper creation.

2. The processor implemented method (300) as claimed in claim **1,** wherein the at least one item corresponds to at least one question, and wherein the at least one template for at least one item is created by an author.

3. The processor implemented method (300) as claimed in claim 1, wherein the at least one template for the at least one item is created based on at least one of attributes: (a) subject, (b) chapter, (c) section, (d) difficulty level of the at least one item, (e) language, (f) distractor level.

4. A system (100), comprising:
a memory (104) storing instructions;
one or more communication interfaces (106); and
one or more hardware processors (102) coupled to the memory (104) via the one or more communication interfaces (106), wherein the one or more hardware processors (102) are configured by the instructions to:
receive, a generator function, and a plurality of placeholder variables as an input;
create, at least one template for at least one item based on the generator function and the plurality of placeholder variables;
dynamically generate, a plurality of placeholder values based on at least one replacement value corresponding to each placeholder variable from the plurality of placeholder variables;
obtain, at least one generated item associated with at least one required option based on the plurality of placeholder values upon dynamically receiving at least one call from the generator function, wherein the at least one replacement value is generated by the generator function to replace the plurality of placeholder variables in the at least one generated item;
obtain, at least one validated item by mapping the at least one generated item associated with the at least one required option to the at least one template for the at least one item , wherein the at least one required option corresponds to: (a) a correct answer, or (b) an incorrect answer;
generate, a question paper based on the at least one generated item with the generator function by selection of at least one rule; and
review the question paper, wherein if
(i) if the question paper is not modified, then the question paper is sealed in an assessment; and
(ii) if the question paper is modified, then the question paper is sent back to question paper creation.

5. The system (100) as claimed in claim 4, wherein the at least one item corresponds to at least one question, and wherein the at least one template for at least one item is created by an author.

6. The system (100) as claimed in claim 4, wherein the at least one template for the at least one item is created based on at least one of attributes: (a) subject, (b) chapter, (c) section, (d) difficulty level of the at least one item, (e) language, (f) distractor level.

7. One or more non-transitory machine-readable information storage mediums comprising one or more instructions which when executed by one or more hardware processors cause:
receiving, a generator function, and a plurality of placeholder variables as an input;
creating, at least one template for at least one item based on the generator function and the plurality of placeholder variables;
dynamically generating, a plurality of placeholder values based on at least one replacement value corresponding to each placeholder variable from the plurality of placeholder variables;
obtaining, at least one generated item associated with at least one required option based on the plurality of placeholder values upon dynamically receiving at least one call from the generator function, wherein the at least one replacement value is generated by the generator function to replace the plurality of placeholder variables in the at least one generated item; and
obtaining, at least one validated item by mapping the at least one generated item associated with the at least one required option to the at least one template for the at least one item, wherein the at least one required option corresponds to: (a) a correct answer, or (b) an incorrect answer;
generating, a question paper based on the at least one generated item with the generator function by selection of at least one rule;
reviewing the question paper, wherein if
(i) if the question paper is not modified, then the question paper is sealed in an assessment; and
(ii) if the question paper is modified, then the question paper is sent back to question paper creation.

8. The one or more non-transitory machine-readable information storage mediums as claimed in claim 7, wherein the at least one item corresponds to at least one question, and wherein the at least one template for at least one item is created by an author.

9. The one or more non-transitory machine-readable information storage mediums as claimed in claim 7, wherein the at least one template for the at least one item is created based on at least one of attributes: (a) subject, (b) chapter, (c) section, (d) difficulty level of the at least one item, (e) language, (f) distractor level.

## Patentansprüche

1. Prozessorimplementiertes Verfahren (300), umfassend:
Empfangen, über einen oder mehrere Hardwareprozessoren, einer Generatorfunktion und einer Mehrzahl von Platzhaltervariablen als Eingabe (302);
Erstellen, über den einen oder die mehreren Hardwareprozessoren, mindestens einer Vorlage für mindestens ein Element basierend auf der Generatorfunktion und der Mehrzahl von Platzhaltervariablen (304);
dynamisches Erzeugen, über den einen oder die mehreren Hardwareprozessoren, einer Mehrzahl von Platzhalterwerten basierend auf mindestens einem Ersatzwert, der jeder Platzhaltervariablen aus der Mehrzahl von Platzhaltervariablen entspricht (306);
Erhalten, über den einen oder die mehreren Hardwareprozessoren, mindestens eines erzeugten Elements, das mit mindestens einer erforderlichen Option assoziiert ist, basierend auf der Mehrzahl von Platzhalterwerten bei dynamischem Empfangen mindestens eines Aufrufs von der Generatorfunktion, wobei der mindestens eine Ersatzwert durch die Generatorfunktion erzeugt wird, um die Mehrzahl von Platzhaltervariablen in dem mindestens einen erzeugten Element zu ersetzen (308);
Erhalten, über den einen oder die mehreren Hardwareprozessoren, mindestens eines validierten Elements durch Abbilden des mindestens einen erzeugten Elements, das mit der mindestens einen erforderlichen Option assoziiert ist, auf die mindestens eine Vorlage für das mindestens eine Element (310), wobei die mindestens eine erforderliche Option Folgendem entspricht: (a) einer korrekten Antwort oder (b) einer inkorrekten Antwort;
Erzeugen, über den einen oder die mehreren Hardwareprozessoren, eines Fragepapiers basierend auf dem mindestens einen erzeugten Element mit der Generatorfunktion durch Auswahl mindestens einer Regel;
Überprüfen, über den einen oder die mehreren Hardwareprozessoren, des Fragepapiers, wobei,
(a) wenn das Fragepapier nicht modifiziert wird, das Fragepapier in einer Bewertung versiegelt wird; und
(b) wenn das Fragepapier modifiziert wird, das Fragepapier zurück zur Fragepapiererstellung gesendet wird.

2. Prozessorimplementiertes Verfahren (300) nach Anspruch 1, wobei das mindestens eine Element mindestens einer Frage entspricht und wobei die mindestens eine Vorlage für mindestens ein Element von einem Autor erstellt wird.

3. Prozessorimplementiertes Verfahren (300) nach Anspruch 1, wobei die mindestens eine Vorlage für das mindestens eine Element basierend auf mindestens einem der folgenden Attribute erstellt wird: (a) Thema, (b) Kapitel, (c) Abschnitt, (d) Schwierigkeitsgrad des mindestens einen Elements, (e) Sprache, (f) Distraktorgrad.

4. System (100), umfassend:
einen Speicher (104), der Anweisungen speichert;
eine oder mehrere Kommunikationsschnittstellen (106); und
einen oder mehrere Hardwareprozessoren (102), die über die eine oder die mehreren Kommunikationsschnittstellen (106) mit dem Speicher (104) gekoppelt sind, wobei der eine oder die mehreren Hardwareprozessoren (102) durch die Anweisungen konfiguriert sind zum:
Empfangen, einer Generatorfunktion und einer Mehrzahl von Platzhaltervariablen als Eingabe;
Erstellen, mindestens einer Vorlage für mindestens ein Element basierend auf der Generatorfunktion und der Mehrzahl von Platzhaltervariablen;
dynamisches Erzeugen, einer Mehrzahl von Platzhalterwerten basierend auf mindestens einem Ersatzwert, der jeder Platzhaltervariablen aus der Mehrzahl von Platzhaltervariablen entspricht;
Erhalten, mindestens eines erzeugten Elements, das mit mindestens einer erforderlichen Option assoziiert ist, basierend auf der Mehrzahl von Platzhalterwerten bei dynamischem Empfangen mindestens eines Aufrufs von der Generatorfunktion, wobei der mindestens eine Ersatzwert durch die Generatorfunktion erzeugt wird, um die Mehrzahl von Platzhaltervariablen in dem mindestens einen erzeugten Element zu ersetzen;
Erhalten, mindestens eines validierten Elements durch Abbilden des mindestens einen erzeugten Elements, das mit der mindestens einen erforderlichen Option assoziiert ist, auf die mindestens eine Vorlage für das mindestens eine Element, wobei die mindestens eine erforderliche Option Folgendem entspricht: (a) einer korrekten Antwort oder (b) einer inkorrekten Antwort;
Erzeugen, eines Fragepapiers basierend auf dem mindestens einen erzeugten Element mit der Generatorfunktion durch Auswahl mindestens einer Regel; und
Überprüfen des Fragepapiers, wobei,
(i) wenn das Fragepapier nicht modifiziert wird, das Fragepapier in einer Bewertung versiegelt wird; und
(ii) wenn das Fragepapier modifiziert wird, das Fragepapier zurück zur Fragepapiererstellung gesendet wird.

5. System (100) nach Anspruch 4, wobei das mindestens eine Element mindestens einer Frage entspricht und wobei die mindestens eine Vorlage für mindestens ein Element von einem Autor erstellt wird.

6. System (100) nach Anspruch 4, wobei die mindestens eine Vorlage für das mindestens eine Element basierend auf mindestens einem der folgenden Attribute erstellt wird: (a) Thema, (b) Kapitel, (c) Abschnitt, (d) Schwierigkeitsgrad des mindestens einen Elements, (e) Sprache, (f) Distraktorgrad.

7. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, bewirken:
Empfangen, einer Generatorfunktion und einer Mehrzahl von Platzhaltervariablen als Eingabe;
Erstellen, mindestens einer Vorlage für mindestens ein Element basierend auf der Generatorfunktion und der Mehrzahl von Platzhaltervariablen;
dynamisches Erzeugen, einer Mehrzahl von Platzhalterwerten basierend auf mindestens einem Ersatzwert, der jeder Platzhaltervariablen aus der Mehrzahl von Platzhaltervariablen entspricht;
Erhalten, mindestens eines erzeugten Elements, das mit mindestens einer erforderlichen Option assoziiert ist, basierend auf der Mehrzahl von Platzhalterwerten bei dynamischem Empfangen mindestens eines Aufrufs von der Generatorfunktion, wobei der mindestens eine Ersatzwert durch die Generatorfunktion erzeugt wird, um die Mehrzahl von Platzhaltervariablen in dem mindestens einen erzeugten Element zu ersetzen; und
Erhalten, mindestens eines validierten Elements durch Abbilden des mindestens einen erzeugten Elements, das mit der mindestens einen erforderlichen Option assoziiert ist, auf die mindestens eine Vorlage für das mindestens eine Element, wobei die mindestens eine erforderliche Option Folgendem entspricht: (a) einer korrekten Antwort oder (b) einer inkorrekten Antwort;
Erzeugen, Fragepapiers basierend auf dem mindestens einen erzeugten Element mit der Generatorfunktion durch Auswahl mindestens einer Regel;
Überprüfen des Fragepapiers, wobei,
(i) wenn das Fragepapier nicht modifiziert wird, das Fragepapier in einer Bewertung versiegelt wird; und
(ii) wenn das Fragepapier modifiziert wird, das Fragepapier zurück zur Fragepapiererstellung gesendet wird.

8. Ein oder mehrere nichtflüchtige maschinenlesbare Informationsspeichermedien nach Anspruch 7, wobei das mindestens eine Element mindestens einer Frage entspricht und wobei die mindestens eine Vorlage für mindestens ein Element von einem Autor erstellt wird.

9. Ein oder mehrere nichtflüchtige maschinenlesbare Informationsspeichermedien nach Anspruch 7, wobei die mindestens eine Vorlage für das mindestens eine Element basierend auf mindestens einem der folgenden Attribute erstellt wird: (a) Thema, (b) Kapitel, (c) Abschnitt, (d) Schwierigkeitsgrad des mindestens einen Elements, (e) Sprache, (f) Distraktorgrad.

## Revendications

1. Procédé mis en œuvre par processeur (300), comprenant :
la réception, via un ou plusieurs processeurs matériels, d'une fonction génératrice, et d'une pluralité de variables génériques en tant qu'entrée (302) ;
la création, via les un ou plusieurs processeurs matériels, d'au moins un modèle pour au moins un élément sur la base de la fonction génératrice et de la pluralité de variables génériques (304) ;
la génération dynamique, via les un ou plusieurs processeurs matériels, d'une pluralité de valeurs génériques sur la base d'au moins une valeur de remplacement correspondant à chaque variable générique de la pluralité de variables génériques (306) ;
l'obtention, via les un ou plusieurs processeurs matériels, d'au moins un élément généré associé à au moins une option requise sur la base de la pluralité de valeurs génériques lors de la réception dynamique d'au moins un appel de la fonction génératrice, dans lequel l'au moins une valeur de remplacement est générée par la fonction génératrice pour remplacer la pluralité de variables génériques dans l'au moins un élément généré (308) ;
l'obtention, via les un ou plusieurs processeurs matériels, d'au moins un élément validé en mettant en correspondance l'au moins un élément généré associé à l'au moins une option requise avec l'au moins un modèle pour l'au moins un élément (310), dans lequel l'au moins une option requise correspond à : (a) une réponse correcte, ou (b) une réponse incorrecte ;
la génération, via les un ou plusieurs processeurs matériels, d'un questionnaire sur la base de l'au moins un élément généré avec la fonction génératrice par la sélection d'au moins une règle ;
l'examen, via les un ou plusieurs processeurs matériels, du questionnaire, dans lequel :
(a) si le questionnaire n'est pas modifié, alors le questionnaire est scellé dans une évaluation ; et
(b) si le questionnaire est modifié, alors le questionnaire est renvoyé à la création de questionnaire.

2. Procédé mis en œuvre par processeur (300) selon la revendication 1, dans lequel l'au moins un élément correspond à au moins une question, et dans lequel l'au moins un modèle pour au moins un élément est créé par un auteur.

3. Procédé mis en œuvre par processeur (300) selon la revendication 1, dans lequel l'au moins un modèle pour l'au moins un élément est créé sur la base d'au moins un des attributs : (a) sujet, (b) chapitre, (c) section, (d) niveau de difficulté de l'au moins un élément, (e) langage, (f) niveau de distracteur.

4. Système (100), comprenant :
une mémoire (104) stockant des instructions ;
une ou plusieurs interfaces de communication (106) ; et
un ou plusieurs processeurs matériels (102) couplés à la mémoire (104) via les une ou plusieurs interfaces de communication (106), dans lequel les un ou plusieurs processeurs matériels (102) sont configurés par les instructions pour :
recevoir, une fonction génératrice, et une pluralité de variables génériques en tant qu'entrée ;
créer, au moins un modèle pour au moins un élément sur la base de la fonction génératrice et de la pluralité de variables génériques ;
générer dynamiquement, une pluralité de valeurs génériques sur la base d'au moins une valeur de remplacement correspondant à chaque variable générique de la pluralité de variables génériques ;
obtenir, au moins un élément généré associé à au moins une option requise sur la base de la pluralité de valeurs génériques lors de la réception dynamique d'au moins un appel de la fonction génératrice, dans lequel l'au moins une valeur de remplacement est générée par la fonction génératrice pour remplacer la pluralité de variables génériques dans l'au moins un élément généré ;
obtenir, au moins un élément validé en mettant en correspondance l'au moins un élément généré associé à l'au moins une option requise avec l'au moins un modèle pour l'au moins un élément, dans lequel l'au moins une option requise correspond à : (a) une réponse correcte, ou (b) une réponse incorrecte ;
générer, un questionnaire sur la base de l'au moins un élément généré avec la fonction génératrice par la sélection d'au moins une règle ; et
examiner le questionnaire, dans lequel :
(i) si le questionnaire n'est pas modifié, alors le questionnaire est scellé dans une évaluation ; et
(ii) si le questionnaire est modifié, alors le questionnaire est renvoyé à la création de questionnaire.

5. Système (100) selon la revendication 4, dans lequel l'au moins un élément correspond à au moins une question, et dans lequel l'au moins un modèle pour au moins un élément est créé par un auteur.

6. Système (100) selon la revendication 4, dans lequel l'au moins un modèle pour l'au moins un élément est créé sur la base d'au moins un des attributs : (a) sujet, (b) chapitre, (c) section, (d) niveau de difficulté de l'au moins un élément, (e) langage, (f) niveau de distracteur.

7. Un ou plusieurs supports de stockage d'informations lisibles par machine non transitoires comprenant une ou plusieurs instructions qui, lorsqu'elles sont exécutées par un ou plusieurs processeurs matériels, amènent :
la réception, d'une fonction génératrice, et d'une pluralité de variables génériques en tant qu'entrée ;
la création, d'au moins un modèle pour au moins un élément sur la base de la fonction génératrice et de la pluralité de variables génériques ;
la génération dynamique, d'une pluralité de valeurs génériques sur la base d'au moins une valeur de remplacement correspondant à chaque variable générique de la pluralité de variables génériques ;
l'obtention, d'au moins un élément généré associé à au moins une option requise sur la base de la pluralité de valeurs génériques lors de la réception dynamique d'au moins un appel de la fonction génératrice, dans lequel l'au moins une valeur de remplacement est générée par la fonction génératrice pour remplacer la pluralité de variables génériques dans l'au moins un élément généré ; et
l'obtention, d'au moins un élément validé en mettant en correspondance l'au moins un élément généré associé à l'au moins une option requise avec l'au moins un modèle pour l'au moins un élément, dans lequel l'au moins une option requise correspond à : (a) une réponse correcte, ou (b) une réponse incorrecte ;
la génération, d'un questionnaire sur la base de l'au moins un élément généré avec la fonction génératrice par la sélection d'au moins une règle ;
l'examen du questionnaire, dans lequel :
(i) si le questionnaire n'est pas modifié, alors le questionnaire est scellé dans une évaluation ; et
(ii) si le questionnaire est modifié, alors le questionnaire est renvoyé à la création de questionnaire.

8. Un ou plusieurs supports de stockage d'informations lisibles par machine non transitoires selon la revendication 7, dans lequel l'au moins un élément correspond à au moins une question, et dans lequel l'au moins un modèle pour au moins un élément est créé par un auteur.

9. Un ou plusieurs supports de stockage d'informations lisibles par machine non transitoires selon la revendication 7, dans lequel l'au moins un modèle pour l'au moins un élément est créé sur la base d'au moins un des attributs : (a) sujet, (b) chapitre, (c) section, (d) niveau de difficulté de l'au moins un élément, (e) langage, (f) niveau de distracteur.
